(19) Europäisches Patentamt
European Patent Office
Office européen des brevets

(11) **EP 4 783 478 A2**

(12) **EUROPEAN PATENT APPLICATION**

(43) Date of publication:
**29.07.2026 Bulletin 2026/31**

(21) Application number: **26153204.8**

(22) Date of filing: **21.01.2026**

(51) International Patent Classification (IPC):
**H04B 7/0452** (2017.01)   **H04B 7/0456** (2017.01)
**G06N 3/0455** (2023.01)

(52) Cooperative Patent Classification (CPC):
**H04B 7/0452; H04B 7/0456;** G06N 3/0455

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.01.2025  FI 20255047**

(71) Applicant: **Nokia Solutions and Networks Oy
02610 Espoo (FI)**

(72) Inventor: **SANKARAN, Chandrasekar
Naperville (US)**

(74) Representative: **Nokia EPO representatives
Nokia Technologies Oy
Karakaari 7
02610 Espoo (FI)**

(54) **AN AI/ML METHOD AND AN APPARATUS FOR MULTI-USER MULTIPLE INPUT MULTIPLE OUTPUT (MU-MIMO) PRECODING**

(57)    An apparatus and a method for multi-user multiple input multiple output (MU-MIMO) precoding, wherein the method comprises providing a first input matrix (210) representing a first channel matrix for a first user equipment (UE), wherein the first input matrix (210) comprises patches (212), wherein the patches (212) of the first input matrix (210) comprise elements, determining for the patches (212) of the first input matrix (210) respectively a first common encoding (214) of the elements of the respective patch (212) of the first input matrix (210), mapping at least the first common encodings (214) to a first output matrix (218).

Fig. 2

EP 4 783 478 A2

## Description

### Field of the invention

Various examples relate to apparatuses and AI/ML methods for multi-user multiple input multiple output (MU-MIMO) precoding.

### Background

A wireless communications system may use multi-user multiple input multiple output (MU-MIMO) communication. MU-MIMO communication increases the spectral efficiency in the wireless communications system. The wireless communications system comprises transmit antennas. The wireless communications system comprises receive antennas.

The wireless communications system may comprise a base station comprising the transmit antennas. The wireless communications system may comprise user equipment (UE) comprising the receive antennas. The base station may use precoders.

### Summary

Some examples relate to a method for multi-user multiple input multiple output (MU-MIMO) precoding, wherein the method comprises providing a first input matrix representing a first channel matrix for a first user equipment (UE), wherein the first input matrix comprises patches, wherein the patches of the first input matrix comprise elements, determining for the patches of the first input matrix respectively a first common encoding of the elements of the respective patch of the first input matrix, mapping at least the first common encodings to a first output matrix. The method may be a vision transformer (ViT) based artificial intelligence or machine learning method.

According to some examples, the method comprises determining the respective first common encoding with a first encoder that is configured to at least encode a position of the respective patch in the first input matrix into a respective position encoding and the elements of the respective patch of the first input matrix into a respective patch encoding, and to determine for the respective patch the respective first common encoding depending on the position encoding and the patch encoding determined for the respective patch, and mapping at least the first common encodings to the first output matrix with a second encoder, in particular a transformer encoder, that is configured to map at least the first common encodings to the first output matrix.

According to some examples, determining the respective first common encoding comprises adding, or concatenating, or multiplying the position encoding and the patch encoding determined for the respective patch to determine the first common encoding for the respective patch.

According to some examples, the method comprises providing a first ground truth for the first output matrix, and training the first encoder and the second encoder depending on a difference between the first ground truth and the first output matrix.

According to some examples, the method comprises determining a first precoding matrix for the first UE depending on the first output matrix.

According to some examples, the method comprises determining a first ground truth precoding matrix that maximizes a sum rate for the first UE, wherein the sum rate for the first UE is defined depending on the first channel matrix and the first ground truth precoding matrix, and determining the first ground truth depending on the first ground truth precoding matrix.

According to some examples, the method comprises providing a second input matrix representing a second channel matrix for a second UE, wherein the second input matrix comprises patches, wherein the patches of the second input matrix comprise elements, determining, with the first encoder, for the patches of the second input matrix respectively a second common encoding of the elements of the respective patch of the second input matrix, mapping at least the first common encodings and the second common encodings with the second encoder to the first output matrix and a second output matrix.

According to some examples, determining the respective second common encoding comprises to encode at least a position of the respective patch in the second input matrix into a respective position encoding and the elements of the respective patch of the second channel matrix into a respective patch encoding, and to determine for the respective patch the respective second common encoding depending on the position encoding and the patch encoding determined for the respective patch.

According to some examples, the method comprises providing a second ground truth for the second output matrix, and training the first encoder and the second encoder depending on a metric comprising at least a difference between the second ground truth and the second output matrix. Treating the columns matrices as vectors, the metric can be, for example, a) the mean of the square of the absolute values of the entries of the vectors in the difference matrix (mean square error, MSE); or b) the squared generalized cosine similarity (SGCS), which measures the similarity between the columns of the ground truth matrices and the corresponding columns in the model output matrices.

According to some examples, the method comprises determining a second precoding matrix for the second UE depending on the second output matrix.

According to some examples, the method comprises determining a second ground truth precoding matrix that maximizes a sum rate for the first UE and the second UE, wherein the sum rate for the first UE and the second UE comprises a summand for the first UE and a summand for the second UE, wherein the summand of the sum rate for the first UE is defined depending on the first channel matrix, a ground truth precoding matrix for the first UE, and a ground truth precoding matrix for the second UE; wherein the summand of the sum rate for the second UE is defined depending on the second channel matrix, a ground truth precoding matrix for the second UE, and a ground truth precoding matrix for the first UE, determining a ground truth for the first UE depending on the ground truth precoding matrix for the first UE and determining a ground truth for the second UE depending on the ground truth precoding matrix for the second UE.

According to some examples, the method comprises training the first encoder or the second encoder depending on a loss, wherein the loss comprises a sum rate for the first UE and the second UE, wherein the sum rate for the first UE and the second UE comprises a summand for the first UE and a summand for the second UE, wherein the summand of the sum rate for the first UE is defined depending on the first channel matrix and the first precoding matrix, the second precoding matrix, wherein the summand of the sum rate for the second UE is defined depending on the second channel matrix, the first precoding matrix and the second precoding matrix, wherein the training comprises maximizing the sum rate for the first UE and the second UE depending on the loss.

Some examples relate to an apparatus for multi-user multiple input multiple output (MU-MIMO) precoding wherein the apparatus is configured for executing the method according to one of the preceding claims.

According to some examples, the apparatus comprises means for executing the method.

According to some examples, the apparatus comprises at least one processor *and at least one memory storing instructions that, when executed by the at least one processor, cause the system to perform at least* the method.

According to some examples, the apparatus is a base station.

## Brief description of the figures

Fig. 1 schematically depicts a MU-MIMO communications system,
Fig. 2 schematically depicts an architecture of a machine learning model,
Fig. 3 depicts a flow-chart comprising steps of a method for MU-MIMO precoding.

## Description of the embodiments

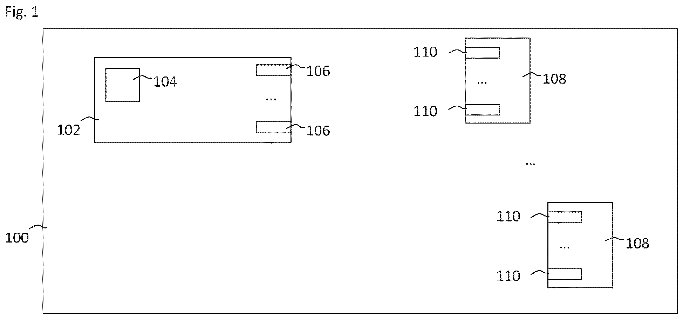

Figure 1 schematically depicts a MU-MIMO communications system 100.

The MU-MIMO communications system 100 comprises an apparatus 102 that is configured for MU-MIMO communication.

The apparatus 102 comprises means 104 for executing a method for MU-MIMO precoding.

According to some examples, the means 104 comprises at least one processor and at least one memory storing instructions that, when executed by the at least one processor, cause the system to perform at least the method.

The apparatus 102 comprises at least one transmit antenna 106. The at least one transmit antenna 106 is configured for MU-MIMO communication.

According to some examples, the apparatus 102 is a base station.

The MU-MIMO communications system 100 comprises at least one UE 108 that is configured for MU-MIMO communication.

The UE 108 comprises at least one receive antenna 110. The at least one receive antenna 110 is configured for MU-MIMO communication.

Figure 1 depicts an exemplary first UE 108 and an exemplary second UE 108. The communications system 100 is not limited to two UE 108. The communications system 100 may comprise one UE 108 or more than two UE 108.

The apparatus 102 is configured to use precoders.

According to some examples, the apparatus 102 uses one precoder for the communication with one UE 108.

According to some examples, the apparatus 102 uses precoders for the communication with at least some of the UE 108 that the communications system 100 comprises.

The precoders improve the MU-MIMO performance. The choice of precoders has a significant impact on achievable throughputs in downlink (DL) and uplink (UL) communication of the MU-MIMO communications system 100.

The precoders for UE *k* 108 are defined by a respective UE specific precoding matrix $V_k$.

The communication between the apparatus 102 and the UE 108 uses channels between one of the transmit antennas 106 and one of the receive antennas 110 of the respective UE 108.

A channel matrix $H_k$ for the *k-th* UE 108 comprises elements that represent a property of the channels that are used for communication between the transmit antennas 106 and the receive antennas 110 of the *k - th* UE 108.

The element of the channel matrix $H_k$ comprises the property of the channel between one of the transmit antennas 106 and one of the receive antennas 110 of the *k - th* UE 108 respectively.

The elements of the channel matrix $H_k$ respectively comprise a real part and an imaginary part.

An exemplary channel matrix $H_k$ for the communications system 100 comprising four transmit antennas 106 and two receive antennas 110 is:

$$H_k = \begin{bmatrix} h_{11_r} + j * h_{11_i} & h_{12_r} + j * h_{12_i} & h_{13_r} + j * h_{13_i} & h_{14_r} + j * h_{14_i} \\ h_{21_r} + j * h_{21_i} & h_{22_r} + j * h_{22_i} & h_{23_r} + j * h_{23_i} & h_{24_r} + j * h_{24_i} \end{bmatrix}$$

where r stands for real and i stands for the imaginary portion of the complex number ( $j = \sqrt{-1}$ ); and ($h_{mn_r} + j * h_{mn_i}$) denotes the channel between receive antenna m and transmit antenna n.

Obtaining an efficient precoder can significantly improve system performance and end user quality of experience/service.

According to some examples, the apparatus 102 is configured to determine a first precoding matrix for the first UE 108. According to some examples, the apparatus 102 is configured to determine a second precoding matrix for the second UE 108.

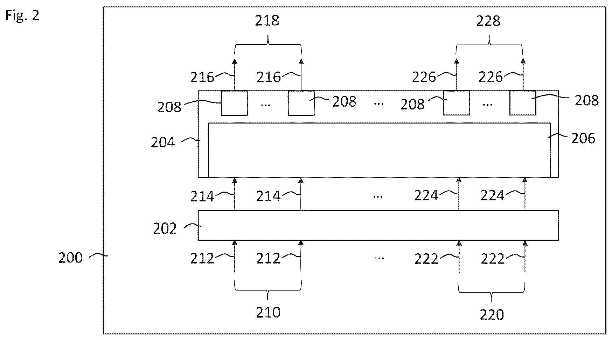

Figure 2 schematically depicts a machine learning model 200.

According to some examples, the apparatus 100 comprises the machine learning model 200.

The machine learning model 200 comprises a first encoder 202. The machine learning model 200 comprises a second encoder 204. According to some examples, the second encoder 204 comprises a transformer encoder 206. According to some examples, the second encoder 204 comprises linear layers 208.

The machine learning model 200 is configured to receive a first input matrix 210.

An exemplary input matrix $H_k^*$ for the communications system 100 comprising four transmit antennas 106 and two receive antennas 110 is:

$$H_k^* = \begin{bmatrix} h_{11_r} & h_{12_r} & h_{13_r} & h_{14_r} \\ h_{21_r} & h_{22_r} & h_{23_r} & h_{24_r} \\ h_{11_i} & h_{12_i} & h_{13_i} & h_{14_i} \\ h_{21_i} & h_{22_i} & h_{23_i} & h_{24_i} \end{bmatrix}$$

The exemplary input matrix $H_k^*$ comprises the real values of the real part $h_{mnr}$ and the real values of the imaginary part $h_{mni}$ of the element $h_{11_r} + j * h_{11_i}$ of the channel matrix $H_k$. The exemplary input matrix $H_k^*$ comprises the real values of the real part $h_{mnr}$ and real values of the imaginary part $h_{mni}$ of the element $h_{mn_r} + j * h_{mn_i}$ of the channel matrix $H_k$ in the same column. The exemplary input matrix $H_k^*$ comprises the real values of the real part $h_{mnr}$ and the real values of the imaginary part $h_{mni}$ of the element $h_{mn_r} + j * h_{mn_i}$ of the channel matrix $H_k$ for the same transmit antenna 106 in the same column.

The first input matrix 210 comprises patches 212 that are associated with a position of the respective patch 212 in the first input matrix 210 respectively.

According to some examples, the patches comprise the elements $h_{mnr}$, $h_{mni}$ of one column of the first input matrix 210 respectively.

This means the respective patch of the exemplary input matrix $H_k^*$ comprises the elements $h_{mnr}$, $h_{mni}$ that are associated with the same transmit antenna 106.

The elements of the channel matrix $H_k$ may be arranged differently in the first input matrix 210 than described for the exemplary channel matrix $H_k$.

The patches of the first input matrix 210 may be arranged differently in the first input matrix 210 than described for the exemplary input matrix $H_k^*$.

According to some examples, the position of the patches in the first input matrix 210 are represented by integer numbers. In the exemplary input matrix $H_k^*$, the integer numbers are associated with the columns from left to right, starting with One.

The first encoder 202 is configured for determining for the patches 212 of the first input matrix 210 respectively a first common encoding 214 of the position associated with the respective patch 212 and the elements of the respective patch 212 of the first input matrix 210.

According to some examples, the first encoder 202 is configured to encode the position of the respective patch of the first input matrix 210 into a respective position encoding.

According to some examples, the first encoder 202 is configured to encode the elements of the respective patch 212 of the first input matrix 210 into a respective patch encoding.

According to some examples, the first encoder 202 is configured to determine for the respective patch the respective first common encoding 214 depending on the position encoding and the patch encoding determined for the respective patch.

According to some examples, the first encoder 202 is configured for determining the respective first common encoding 214 by adding the position encoding and the patch encoding determined for the respective patch to determine the first common encoding 214 for the respective patch.

According to some examples, the first encoder 202 is configured for determining the respective first common encoding 214 by concatenating the position encoding and the patch encoding determined for the respective patch to determine the first common encoding 214 for the respective patch.

According to some examples, the first encoder 202 is configured for determining the respective first common encoding 214 by multiplying the position encoding and the patch encoding determined for the respective patch to determine the first common encoding 214 for the respective patch.

The second encoder 204 is configured for mapping at least the first common encodings 214 determined for the first input matrix 210 to patches 216 for a first output matrix 218.

The patches 216 of the first output matrix 218 comprise elements of the first output matrix 218.

An element of the first output matrix 218 comprises either the real value of a real part or the real value of an imaginary part of an element of the first precoding matrix.

According to some examples, the patches 216 of the first output matrix 218 are columns of the first output matrix 218.

According to some examples, the position of the patches in the first output matrix 218 are represented by integer numbers. In an exemplary output matrix that is determined for the exemplary input matrix $H_k^*$, the integer numbers are associated with the columns from left to right, starting with One.

The patches 216 of the first output matrix 218 may be arranged differently in the first output matrix 218.

The first input matrix 210 may be associated with the first UE 108.

The first precoding matrix comprises elements.

The elements of the first precoding matrix comprise the real value of one real part and the real value of one imaginary part respectively.

The first output matrix 218 comprises elements that comprise the real value of a real part or the real value of an imaginary part of a respective element of the first precoding matrix.

The elements of the first output matrix 218 that comprise the real value of the real part and the real value of the imaginary part of a respective element of the first precoding matrix are associated with the respective element of the first precoding matrix.

The first precoding matrix comprises the real part and the imaginary part that are associated with the respective element of the first precoding matrix.

According to some examples, the machine learning model 200 is configured to receive a number of input matrices for a number of UEs (one input matrix per UE).

Processing a plurality of input matrices is described by way of example of the machine learning model 200 being configured to receive a second input matrix 220.

The second input matrix 220 comprises patches 222 that are associated with a position of the respective patch 222 in the second input matrix 220 respectively.

According to some examples, the patches 222 in the second input matrix 220 are defined as described for the patches 212 of the first input matrix 210.

According to some examples, the position of the patches 222 in the second input matrix 220 are represented as described for the positions of the patches 212 in the first input matrix 210.

The first encoder 202 is configured for determining for the patches 222 of the second input matrix 220 respectively a second common encoding 224 of the position associated with the respective patch 222 of the second input matrix 220 and the elements of the respective patch 222 of the second input matrix 220.

The second encoder 204 is configured to learn and determine relations between the first common encoding 214 and the second common encoding 224 and collectively output the first output matrix 218 and the second output matrix 228.

According to some examples, for a plurality of UE, the second encoder 204 is configured to receive a plurality of common encodings including the first common encoding 214 and the second common encoding 224 for a plurality of input matrices including the first input matrix 210 and the second input matrix 220. According to some examples, for the plurality of UE, the second encoder 204 is configured to learn and determine the relations between the plurality of common encodings and to collectively output the output matrices for the plurality of UE, including the first output matrix 218 and the second output matrix 228.

The patches 226 of the second output matrix 228 comprise elements of the second output matrix 228.

An element of the second output matrix 228 comprises either the real value of a real part or the real value of an imaginary part of an element of the second precoding matrix.

According to some examples, the patches 226 of the second output matrix 228 are columns of the second output matrix 228.

According to some examples, the position of the patches 226 in the second output matrix 228 are represented as described for the positions of the patches 216 in the first output matrix 218.

The second input matrix 220 may be associated with the second UE 108.

The second precoding matrix comprises elements.

The elements of the second precoding matrix comprise the real value of one real part and the real value of one imaginary part respectively.

The second output matrix 228 comprises elements that comprise the real value of a real part or the real value of an imaginary part of a respective element of the second precoding matrix.

The elements of the second output matrix 228 that comprise the real value of the real part and the real value of the imaginary part of a respective element of the second precoding matrix are associated with the respective element of the second precoding matrix.

The second precoding matrix comprises the real part and the imaginary part that are associated with the respective element of the second precoding matrix.

The machine learning model 200 may comprise a vision transformer. The vision transformer may comprise the first encoder 202 and the second encoder 204.

According to some examples, each row or column of the respective input matrix is considered as an image patch.

This is described by way of example of the columns as being the patch. The same applies when the rows of the respective input matrix are treated as patches.

The vision encoder provides a patch embedding for the respective patch. The patch embedding is for example a first vector. For the exemplary input matrix $H_k^*$ four patches are provided.

To extract relations between the patches (i.e., columns) the vision encoder maps each patch into a higher dimensional vector space. The vision encoder maps each patch for example with the first encoder 202 into the higher dimensional vector space. The dimension of the higher dimensional vector space is higher than the dimension of the patch. For the exemplary input matrix $H_k^*$ the dimension of the vector space is greater than 4.

This mapping is called an embedding. The dimensionality of this embedding vector is a hyper-parameter of the machine learning model 200. According to some examples, the hyper-parameter is obtained from training.

The vision encoder provides a positional embedding for the respective patch.

The patch embedding by itself does not contain information about the position or location of each vector in the input matrix. The position embedding enables to distinguish the patch embedding of the same patch appearing in different positions. The positional embedding maps the position of each patch in the input matrix into a second vector in the vector space.

The common encoding for a patch and its position is for example a third vector in the vector space. The third vector is for example determined by concatenating the first vector and the third vector, or by elementwise adding or multiplying the first vector and second vector.

The third vector is determined for each column of the input matrix. The third vectors are input into the transformer encoder 206. The transformer encoder 206 output is processed for example by the linear layers 208 to determine the patches for the output matrix. The vision encoder comprises for example one linear layer 208 for each column of the output matrix.

According to some examples, the machine learning model 200 is trained. According to some examples, the machine learning model 200 comprises weights. According to some examples, the weights of the machine learning model 200 are determined in the training.

According to some examples, the machine learning model 200 is trained in a supervised manner depending on a predetermined precoding matrix V.

The predetermined precoding matrix V is for example provided to from an output of a system simulation.

According to some examples, the weights of the machine learning model 200 are trained to minimize an error between the output matrix that the machine learning model outputs and a ground truth.

According to some examples, the ground truth is determined by rearranging the real values of the real part and the imaginary part of the elements of the predetermined precoding matrix V according to the format in that the elements of the output matrix are output by the machine learning model 200.

According to some examples, the machine learning model 200 is trained in an un-supervised manner depending on a loss.

According to an example, the loss comprises a sum rate:

$$\sum_{k=1}^{K} \log_2 \left| I + H_k V_k V_k^H H_k^H \left( \sum_{m=1, m \neq k}^{K} H_k V_m V_m^H H_k^H + \sigma^2 I \right)^{-1} \right|$$

wherein

$V_k$ denotes the precoder for the k-th UE 108;

$H_k$ denotes the channel matrix between the k-th UE 108 and the apparatus 102;

$\sigma^2$ is noise power;

$I$ is the identity matrix of appropriate shape.

The matrix $H_k$ is of shape NRX x NTX, where NRX is the number of receive antennas at the UE 108 and NTX is the number of transmit antennas at the apparatus 102.

According to some examples, the weights of the machine learning model 200 are trained to maximize the sum rate.

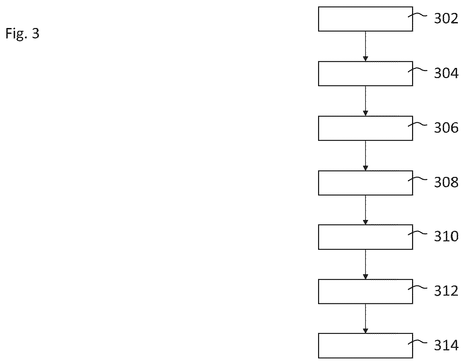

Figure 3 depicts a flow-chart comprising steps of the method. The method is described by way of example of processing a plurality of channel matrices $H_k$.

The method comprises a step 302.

The step 302 comprises providing the plurality of channel matrices $H_k$.

According to some examples, the plurality of channel matrices $H_k$ comprises the first channel matrix for the first UE 108.

According to some examples, the plurality of channel matrices $H_k$ comprises the second channel matrix for the second UE 108.

The method comprises a step 304.

The step 304 comprises determining, depending on the respective channel matrix $H_k$, a respective input matrix.

The respective input matrix comprises respective patches of the respective input matrix. A respective patch may be a column or a row of the respective input matrix. The position of the respective patch may be the index of the column or the row in the respective input matrix.

According to some examples, the step 302 comprises determining depending on the first channel matrix, the first input matrix 210.

According to some examples, the step 302 comprises determining, depending on the second channel matrix, the second input matrix 220.

The method comprises a step 306.

The step 306 comprises determining for the respective patches of the respective input matrix a respective common encoding.

According to some examples, determining the respective common encoding comprises mapping the elements of the respective patch with the first encoder 202 to a respective patch encoding, by mapping the position of the respective patch with the first encoder 202 to a respective position encoding and determining the common encoding of the respective patch with the first encoder 202 by adding, concatenating or multiplying the patch encoding and the position encoding determined for the respective patch.

According to some examples, the step 306 comprises determining for the patches 212 of the first input matrix 210 respectively the first common encoding 214.

According to some examples, the step 306 comprises determining for the patches 222 of the second input matrix 220 respectively the second common encoding 224.

According to some examples, the respective first common encoding 214 is determined with the first encoder 202.

According to some examples, the respective second common encoding 224 is determined with the first encoder 202.

The method comprises a step 308.

The step 308 comprises mapping the common encodings to one output matrix per channel matrix of the plurality of channel matrices.

According to some examples, the common encodings are mapped to the output matrices with the second encoder 204.

According to some examples, the step 306 comprises mapping at least the first common encodings 214 determined for the first input matrix 210 to the first output matrix 218.

According to some examples, the step 306 comprises mapping at least the first common encodings 214 determined for the first input matrix 210 and the second common encodings 214 determined for the second input matrix 220 to the first output matrix 218 and the second output matrix 218.

According to some examples, the first common encodings 214 are mapped to the first output matrix 218 with the second encoder 204.

According to some examples, the first common encodings 214 and the second common encodings 224 are mapped to the first output matrix 218 and the second output matrix 228 with the second encoder 204.

The method may comprise training the first encoder 202 and/or the second encoder 204. The training may be supervised or unsupervised. The training may be based on the sum rate for the plurality of channel matrices $H_k$.

According to some examples, for the supervised training the method comprises a step 310.

The step 310 comprises providing a respective ground truth for the respective output matrix.

According to some examples, the ground truth for the output matrices is determined as the ground truth precoding matrices that maximize the sum rate for the plurality of channel matrices $H_k$. According to some examples, the ground truth for a respective output matrix is determined depending on one of the ground truth precoding matrices that maximize the sum rate for the plurality of channel matrices $H_k$ respectively. According to some examples, the ground truth for a respective output matrix is a respective one of the ground truth precoding matrices that maximize the sum rate for the plurality of channel matrices $H_k$ respectively.

The sum rate is defined depending on the channel matrices $H_k$ and the ground truth precoding matrices. The summand of the sum rate for a respective UE 108 is defined depending on the channel matrix $H_k$ and the ground truth precoding matrix for all the UEs.

The step 310 may comprise providing a first ground truth for the first output matrix 218.

According to some examples, the first ground truth is determined depending on a first ground truth precoding matrix.

According to some examples, the first ground truth precoding matrix is determined that maximizes the sum rate for the first UE 108.

The sum rate for the first UE 108 is defined depending on the first channel matrix and the first ground truth precoding matrix.

According to some examples, the step 310 comprise determining a second ground truth for the second output matrix 228.

According to some examples, the second ground truth is determined depending on a second ground truth precoding matrix.

According to some examples, the first ground truth precoding matrix and the second ground truth precoding matrix are determined that maximizes the sum rate for the first UE 108 and the second UE 108.

The sum rate for the first UE 108 and the second UE 108 is defined depending on the first channel matrix and the first ground truth precoding matrix and the second channel matrix and the second ground truth precoding matrix.

The sum rate for the first UE 108 and the second UE 108 comprises a summand for the first UE 108 and a summand for the second UE 108.

The summand of the sum rate for the first UE 108 is defined depending on the first channel matrix and the ground truth precoding matrix for the first UE 108 and the ground truth precoding matrix for the second UE 108.

The summand of the sum rate for the second UE 108 is defined depending on the second channel matrix and the ground truth precoding matrix for the second UE 108 and the ground truth precoding matrix for the first UE.

According to some examples, for supervised or unsupervised training the method comprises a step 312.

The step 312 comprises training the first encoder 202 or the second encoder 204.

For supervised training, the step 312 comprises training depending on a metric comprising a respective difference between the ground truth and the output matrix for the respective UE 108.

According to some examples, the step 312 comprises training depending on a difference between the first ground truth and the first output matrix 218.

According to some examples, the step 312 comprises training the first encoder 202 or the second encoder 204 depending on a difference between the second ground truth and the second output matrix 228.

For unsupervised training, the step 312 comprises training the first encoder 202 or the second encoder 204 depending on the loss.

According to some examples, the unsupervised training comprises maximizing the sum rate depending on the loss.

According to some examples, the method comprises a step 314.

The step 314 comprises determining 314 the first precoding matrix for the first UE 108 depending on the first output matrix 218.

The elements of the first precoding matrix comprise the real value of one real part and the real value of one imaginary part respectively.

The first output matrix 218 comprises elements that comprise the real value of a real part or the real value of an imaginary part of a respective element of the first precoding matrix.

The elements of the first output matrix 218 that comprise the real value of the real part and the real value of the imaginary part of a respective element of the first precoding matrix are associated with the respective element of the first precoding matrix.

The step 314 comprises selecting the real value of the real part and the real value of the imaginary part that are associated with the respective element of the first precoding matrix to determine the respective element of the first precoding matrix.

According to some examples, the step 314 comprises determining the second precoding matrix for the second UE 108 depending on the second output matrix 228.

The elements of the second precoding matrix comprise the real value of one real part and the real value of one imaginary part respectively.

The second output matrix 228 comprises elements that comprise the real value of a real part or the real value of an imaginary part of a respective element of the second precoding matrix.

The elements of the second output matrix 228 that comprise the real value of the real part and the real value of the imaginary part of a respective element of the second precoding matrix are associated with the respective element of the second precoding matrix.

According to some examples, the step 314 comprises selecting the real value of the real part and the real value of the imaginary part that are associated with the respective element of the second precoding matrix to determine the respective element of the second precoding matrix.

**Claims**

1. A method for multi-user multiple input multiple output (MU-MIMO) precoding, wherein the method comprises providing (302) a first input matrix (210) representing a first channel matrix for a first user equipment (UE) (108), wherein the first input matrix (210) comprises patches (212), wherein the patches (212) of the first input matrix (210) comprise elements, determining (306) for the patches (212) of the first input matrix (210) respectively a first common encoding (214) of the elements of the respective patch (212) of the first input matrix (210), mapping (308) at least the first common encodings (214) to a first output matrix (218).

2. The method according to claim 1, wherein the method comprises determining (306) the respective first common encoding (214) with a first encoder (202) that is configured to at least encode a position of the respective patch in the first input matrix (210) into a respective position encoding and the elements of the respective patch (212) of the first input matrix (210) into a respective patch encoding, and to determine for the respective patch the respective first common encoding (214) depending on the position encoding and the patch encoding determined for the respective patch, and mapping (308) at least the first common encodings (214) to the first output matrix (218) with a second encoder (204), in particular a transformer encoder, that is configured to map at least the first common encodings (214) to the first output matrix (218).

3. The method according to claim 2, wherein determining the respective first common encoding comprises adding, or concatenating, or multiplying the position encoding and the patch encoding determined for the respective patch to determine the first common encoding for the respective patch

4. The method according to claim 2 or 3, wherein the method comprises providing (310) a first ground truth for the first output matrix (218), and training (312) the first encoder (202) or the second encoder (204) depending on a difference between the first ground truth and the first output matrix (218).

5. The method according to one of the preceding claims, wherein the method comprises determining (314) a first precoding matrix for the first UE (108) depending on the first output matrix (218).

6. The method according to claim 5, wherein the method comprises determining (310) a first ground truth precoding matrix that maximizes a sum rate for the first UE (108), wherein the sum rate for the first UE (108) is defined depending on the first channel matrix and the first ground truth precoding matrix, and determining (310) the first ground truth depending on the first ground truth precoding matrix.

7. The method according to one of the claims 2 to 6, wherein the method comprises providing (302) a second input matrix (220) representing a second channel matrix for a second UE (108), wherein the second input matrix (220) comprises patches (222), wherein the patches (222) of the second input matrix (220) comprise elements, determining (306), with the first encoder (202), for the patches (222) of the second input matrix (220) respectively a second common encoding (224) of the elements of the respective patch (222) of the second input matrix (220), mapping (308) at least the first common encodings (214) and the second common encodings (224) with the second encoder (204) to the first output matrix (218) and a second output matrix (228).

8. The method according to claim 7, wherein determining (306) the respective second common encoding (224) comprises to at least encode a position of the respective patch in the second input matrix (220) into a respective position encoding and the elements of the respective patch (222) of the second channel matrix into a respective patch encoding, and to determine for the respective patch the respective second common encoding (224) depending on the position encoding and the patch encoding determined for the respective patch.

9. The method according to claim 8, wherein the method comprises providing (310) a second ground truth for the second output matrix (228), and training (312) the first encoder (202) and the second encoder (204) depending on a metric comprising at least a difference between the second ground truth and the second output matrix (228).

10. The method according to one of the claims 7 to 9, wherein the method comprises determining (314) a second precoding matrix for the second UE (108) depending on the second output matrix (228).

11. The method according to one of the claims 7 to 10, wherein the method comprises determining (310) a second ground truth precoding matrix that maximizes a sum rate for the first UE (108) and the second UE (108), wherein the sum rate for the first UE (108) and the second UE (108) comprises a summand for the first UE (108) and a summand for the second UE (108), wherein the summand of the sum rate for the first UE is (108) defined depending on the first channel matrix, a ground truth precoding matrix for the first UE (108), and a ground truth precoding matrix for the second UE (108); wherein the summand of the sum rate for the second UE (108) is defined depending on the second channel matrix, a ground truth precoding matrix for the second UE, and a ground truth precoding matrix for the first UE, determining (310) a ground truth for the first UE (108) depending on the ground truth precoding matrix for the first UE (108) and determining (310) a ground truth for the second UE depending on the ground truth precoding matrix for the second UE (108).

12. The method according to one of the claims 10 or 11, wherein the method comprises training (312) the first encoder (202) or the second encoder (204) depending on a loss, wherein the loss comprises a sum rate for the first UE (108) and the second UE (108), wherein the sum rate for the first UE and the second UE (108) comprises a summand for the first UE and a summand for the second UE (108), wherein the summand of the sum rate for the first UE (108) is defined depending on the first channel matrix, the first precoding matrix, and the second precoding matrix, wherein the summand of the sum rate for the second UE (108) is defined depending on the second channel matrix, the first precoding matrix and the second precoding matrix, wherein the training (312) comprises maximizing the sum rate for the first UE (108) and the second UE (108) depending on the loss.

13. An apparatus (102) for multi-user multiple input multiple output (MU-MIMO) precoding, wherein the apparatus (102) comprises means (104) for executing the method according to one of the claims 1 to 12.

14. The apparatus (102) according to claims 13, wherein the apparatus (102) is a base station.

Fig. 1

Fig. 2

Fig. 3

302

304

306

308

310

312

314